# EUROPEAN PATENT SPECIFICATION

(11) **EP 0 760 042 B1**
(45) Date of publication and mention of the grant of the patent: **30.10.2002**
(21) Application number: 94923045.2
(22) Date of filing: 19.07.1994
(51) Int. Cl.: E04C 2/36, B63B 29/02, B63B 3/68, B32B 3/12

(54) **WALLS STRUCTURE FOR CABINS AND THE LIKE**
WANDAUFBAU FÜR KABINEN UND DERGLEICHEN
STRUCTURE DE CLOISONS POUR CABINES ET ANALOGUE

(30) Priority: 23.05.1994 IT PD940094
(43) Date of publication of application: 05.03.1997
(73) Proprietor: CENTRO PER GLI STUDI DI TECNICA NAVALE S.P.A., 16129 Genova (IT)
(72) Inventor: FAROLFI, Franco, 34139 Trieste (IT)
(74) Representative: Cantaluppi, Stefano
(86) International application number: IT9400117
(87) International publication number: WO95032345

(56) References cited:
- EP-A- 0 314 625
- DE-A- 3 913 255
- FR-A- 2 183 112
- FR-A- 2 541 180
- FR-A- 2 628 135
- FR-A- 2 672 324
- US-A- 4 384 020

## Description

### Techincal Field

This invention relates to a board structure for erecting self-supporting naval walls in ship cabins, rooms and the like according to the preamble of claim 1.

### Background Art

Board structures pertinent to the present invention are disclosed in EP-A-314625 and FR 2672324. However the structure disclosed in EP-A-314625 is not self-supporting and requires appropriate supporting structure for erecting walls. The board structure disclosed in FR 2672324 is known in connection with false ceilings of rooms and the like. Although the French document indicates that the board structure can be used for erecting walls, by mounting the same in spaced-apart relationship, these structures however are not suitable in naval environment for building cabins and the like in the shipbuilding industry.

The walls of cabins and other partitions are currently erected from pre-assembled modular boards. The boards comprise a flat member of sheet metal having bent longitudinal edges in order, on the one side, to stiffen the aggregate of the panels assembled into a wall, and on the other side, provide a joint to adjacent boards.

A mat of compressed rock wool is applied adhesively to the out-of-view surface of the flat member for heat and sound insulation purposes.

A major drawback of such a structure is that the board width is lirnited, usually to within 600 mm. Thus, when walls are to be erected which measure a few meters in length, a number of boards must be joined together. This adds significantly to the wall cost, and harms the finish of the exposed side of the wall. In fact, the run of the joint line between adjacent boards, however close these may have been set, is an undesired mark with quality cabins.

Furthermore, walls erected from conventional construction boards are comparatively heavy. The weight factor is of great concern with ships, especially cruise ships on which cabins are to be found in great numbers even far above the main deck, making for a top-heavy and roll-prone vessel.

The underlying problem of this invention is to provide boards which are so designed and constructed as to overcome the above drawbacks of prior boards.

### Disclosure of Invention

This problem is solved by this invention providing a board structure according to the appended claims.

### Brief Description of Drawings

The invention will be further described with reference to a preferred embodiment thereof, shown by way of illustration and not of limitation in the accompanying drawings, in which:
Figure 1 is a part-sectional perspective view of a portion of a board embodying this invention;
Figures 2 and 3 are longitudinal and cross sectional views, respectively, of a board having the construction shown in Figure 1;
Figure 4 is a schematic athwartship section view through a deck of a ship showing two contiguous cabin walls according to the invention in their erected state;
Figure 5 is a perspective view of a cabin constructed from the boards shown in the preceding Figures, but without a ceiling;
Figure 6 is a longitudinal section view of a detail of the cabin in Figure 5;
Figure 7 is an exploded perspective view showing, partly in section, the end fitting arrangement for two adjoining boards;
Figure 8 is a longitudinal section view of two boards end fitted to each other;
Figures 9 and 10 are elevation views of respective details of the fitting arrangement in Figures 7 and 8;
Figure 11 is a part-sectional perspective view of a further detail of a cabin erected in accordance with the invention.

### Best Mode of Carrying Out the Invention

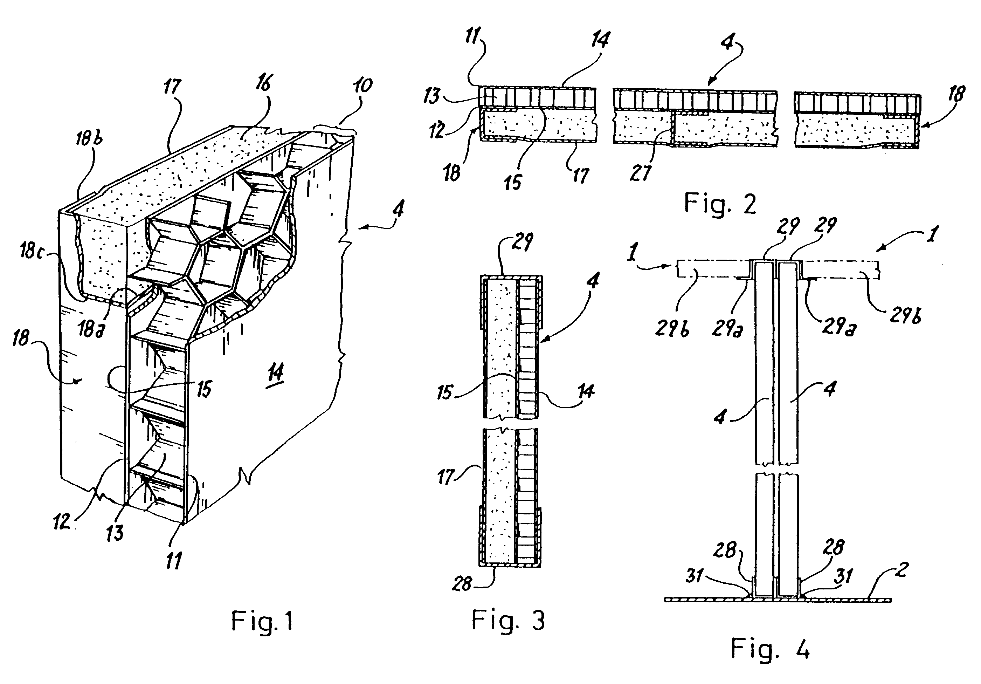

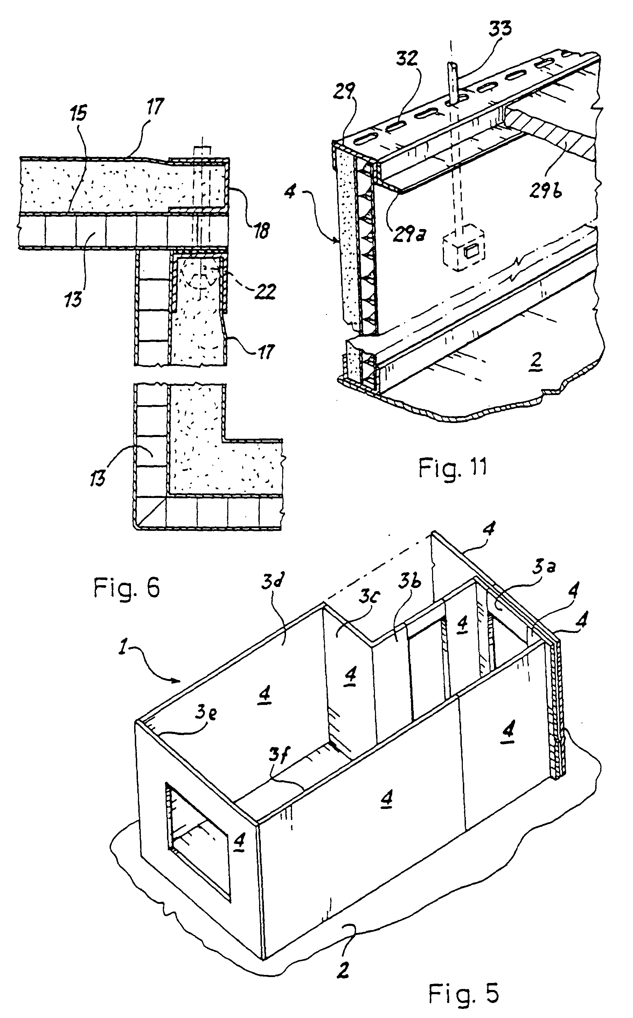

Generally shown at 1 in Figures 4 and 5 is a cabin erected on a steel deck 2 of a ship or offshore rig. The cabin 1 comprises six walls 3a-f, all made up of fabricated boards 4 according to the invention.

The term -wall- is intended to include ceiling and the like, providing the structure is self-supporting.

The boards 4 are all alike in construction, being of the type shown in Figure 1, with a multi-layered flat member 10 which includes two sheets 11, 12 of a fire-resistant synthetic resin reinforced with glass fiber wherebetween a honeycomb spacer 13 is sandwiched. The sheets 11 and 12 are preferably of the kind manufactured by Messrs. Eurocompositi of Arcola (La Spezia), and are about 1 millimeter thick, the spacer 13 being preferably made of an aluminum alloy and being about 10 millimeters thick.

The flat member 10 has first and second outward faces 14, 15 lying opposite relative to the spacer 13. The first face 14 forms the exposed surface of a wall made up with boards 4, and is finished with the application of a film or a two-component polyurethane paint. It is also contemplate that the first face 14 may be otherwise covered, e.g. with gel coat, or veneer, or fabric coverings, etc..

The second face 15 is preferably adhesively applied a heat and sound insulating member 16, such as a mat of rock wool or Si-Al fiber. The remote surface of said member 16 from the face 15 is preferably covered with a third sheet 17 of reinforced resin, of the same type as the sheets 11 and 12 but smaller thickness, e.g. 0.5 mm thick. It is also contemplated that the board may be fabricated without the member 16 and the third sheet 17, especially where a wall to be composed therewith is to exhibit no specified heat and/or sound insulation properties.

Along the longitudinally opposite edges of the board 4, i.e. where the boards would be fitted in contiguous positions, respective C-shaped moldings 18 are arranged with facing convex sides. These moldings have two parallel flanges 18a,b held apart by a web 18c. The moldings 18 are glued on the sheet 12 with the flange 18a close against the second surface 15 and the mat 16 between the flanges 18a,b. The web 18c is formed with apertures 19 which extend along the longitudinal direction of the molding 18 and have preferably greater breadth areas 20a,b at the longitudinally opposite ends and a smaller middle area 21. The breadth of the areas 20a,b is at least equal to the diameter of a ball head 23 of a joint member generally shown at 22, and the breadth of the middle area 21 is smaller than said diameter and equal approximately to the diameter of a cylindrical tang 24 whereby said head 23 is connected to a threaded shank 26 of the member 22.

In this way, the head 23 can be inserted into its corresponding aperture 19 through the areas 20a,b and retained at the middle area 21.

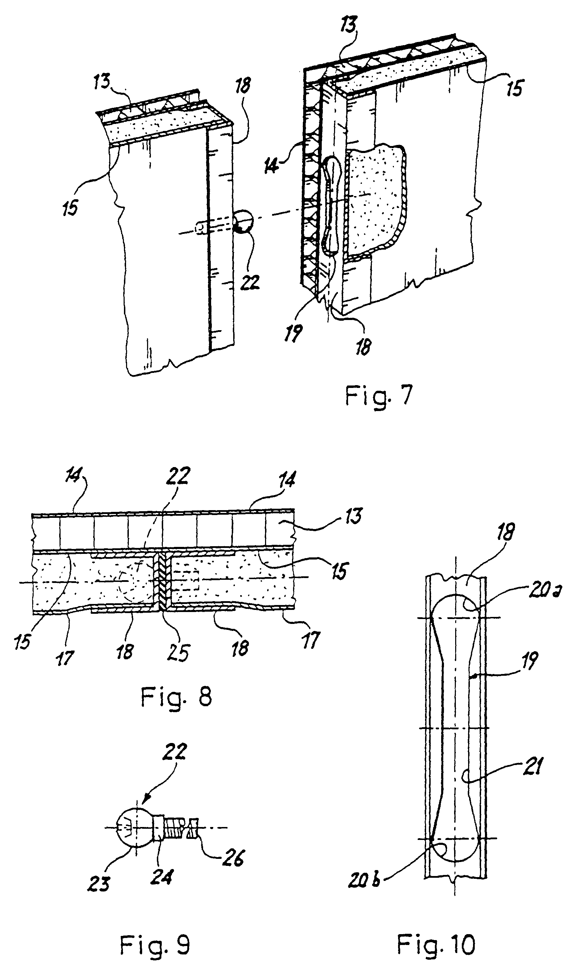

The joint member 22 is secured to the adjacent board 4 in a hole through the web 18c, in the instance of the boards being end-fitted together, or in a perpendicular hole to the flat member through the flanges 18a,b, in the instance of a corner joint, as respectively shown by the sketches of Figures 8 and 6. A sound-insulative seal 25 is fitted between the web 18c of the molding that carries the member 22 and the surface on which said web 18c abuts when fitting the boards together. Notice that with the board structure of this invention, it would also be possible to provide continuous corner joints where the junction corner is in full view (the instance of the joint between the walls 3b and 3c in Figure 5-Figure 6); in this case, the construction of a single board to supplement the two walls in question is contemplated.

To improve the strength and rigidity of the boards 4, the insertion of one or more stiffening members consisting of moldings 27 having the same shape as the moldings 18 parallel therewith is contemplated. The moldings 27 are set at regular spacings, e.g. of 1000 mm, according to the wall strength specifications.

Provided along the two opposite edges of the board 4 in the transverse direction, are respective C-shaped section bars 28, 29, both made of steel treated against corrosion. The section bar 28 is used for securing the board 4 to the ship deck, e.g. by spot welding as shown schematically at 31; the section bar 29 complements the upper free edge of the board and carries a further L-shaped molding 29a that provides support for conventional ceiling panelling boards 29b.

Notice that the section bar 29 is preferably formed with a plurality of slots 32 serving as passageways for mounting, inside the board 4, pipes 33 of appropriate diameter through which power distribution wires to the taps and electric appliance switches would be later led.

Among the major advantages of the inventive board structure is that significant savings in labor can be had in manufacturing and assembling cabin walls. In addition, the resultant structure is quite strong, which allows boards of considerable breadth to be provided, even to the full size of a wall to be formed thereby. Thus, seam lines between adjacent boards are avoided, and the appearance of the cabin surface finish improved. Finally, the boards are unaffected by corrosion and are fire-resistant, which makes them specially suitable for use in structures designed to operate in a marine environment.

## Claims

1. A board structure for erecting self-supporting naval walls such as ship cabins, ship rooms and the like, comprising a flat member (10) having a first face (14) intended to form the in-view surface of a wall and an opposite second face (15), a means of board heat and sound insulation associated with the flat member (10) on the corresponding side thereof to the second face (15), said flat member (10) comprising two sheets (11, 12) respectively carrying said first and said second face (14, 15) and a spacer (13) of honeycomb construction being interposed between said sheets and bonded thereto, **characterised in that** said sheets (11, 12) are made of fire-resistant reinforced resin, said honeycomb structure is made of metal and said insulating means comprises a mat (16) of Si-Al fibers, said mat being interposed between one of said sheets (11, 12) and a third sheet (17), said third sheet being also a sheet of a fire- resistant reinforced resin, so that said board structure is wholly fire and water resistant.

2. A structure according to Claim 1, wherein said sheets (11, 12) are made of fire-resistant resin laminate reinforced with glass fiber.

3. A structure according to one or more of the preceding claims, wherein said honeycomb construction is made of an aluminium alloy.

4. A structure according to one or more of the preceding claims, wherein said sheets (11, 12) are about 1 mm thick.

5. A structure according to one or more of the preceding claims, wherein said spacer (13) thickness is equal to or greater than about 10 mm.

6. A structure according to one or more of the preceding claims, wherein said mat (16) is applied to said second face (15).

7. A structure according to one or more of the preceding claims, wherein said board (4) carries an end molding (18) along at least two opposite sides.

8. A structure according to Claim 7, wherein said end molding (18) is set against the second face (15) of said flat member (10).

9. A structure according to Claim 8, wherein the end molding (18) is C-shaped, said mat (16) with said third sheet (17) being received between the flanges (18a,b) of said end molding (18).

10. A structure according to one or more of the preceding claims, wherein said boards (4) carry, on at least two opposite sides thereof, respective joint means and counter-means adapted for mutual engagement to connect adjacent boards together.

11. A structure according to Claim 10, wherein said joint means and counter-means are associate with the end moldings (18).

12. A structure according to Claim 11, wherein said joint means comprises at least one ball head (23) joint member (22) bonded with a tang (24) thereof to a board, and the joint counter-means comprises at least one corresponding aperture (19) in the end molding (18) of the adjoining board (4), said aperture having at least a first portion (20a,b) in which said ball (23) head is releasably engageable, and at least a second portion (21) in which said ball head (23) is retained.

13. A structure according to one or more of the preceding claims, wherein stiffening members (27) are associated as by gluing with the second face (15).

14. A structure according to one or more of the preceding claims, wherein both transversely opposite sides of said board (4) are applied a molding (28, 29) which erabraces said board (4) between said first (11) and third (17) sheet.

## Patentansprüche

1. Plattenstruktur zum Errichten selbsttragender Schiffswände wie etwa Schiffskabinen, Schiffsräume und dergleichen, die versehen ist mit einem flachen Element (10), das eine erste Fläche (14), die die innere Oberfläche einer Wand bilden soll, und eine gegenüberliegende zweite Fläche (15) besitzt, und mit einem Mittel zur Wärme- und Schallisolation der Platte, das dem flachen Element (10) auf der der zweiten Fläche (15) entsprechenden Seite zugeordnet ist, wobei das flache Element (10) zwei Lagen (11, 12), die die erste bzw. die zweite Fläche (14, 15) tragen, sowie einen Abstandshalter (13) mit Bienenwabenkonstruktion, der zwischen die Lagen eingefügt und an diesen befestigt ist, umfasst, **dadurch gekennzeichnet, dass** die Lagen (11, 12) aus einem feuerbeständigen, verstärkten Harz hergestellt sind, die Bienenwabenstruktur aus einem Metall hergestellt ist und das Isolationsmittel eine Matte (16) aus Si-Al-Fasern umfasst, die zwischen eine der Lagen (11, 12) und eine dritte Lage (17) eingefügt ist, die ebenfalls eine Lage aus feuerbeständigem, verstärkten Harz ist, so dass die Plattenstruktur als Ganzes feuer- und wasserbeständig ist.

2. Struktur nach Anspruch 1, bei der die Lagen (11, 12) aus einem feuerbeständigen Harzlaminat, das mit Glasfasern verstärkt ist, hergestellt sind.

3. Struktur nach einem oder mehreren der vorhergehenden Ansprüche, bei der die Bienenwabenstruktur aus einer Aluminiumlegierung hergestellt ist.

4. Struktur nach einem oder mehreren der vorhergehenden Ansprüche, bei der die Lagen (11, 12) eine Dicke von etwa 1 mm besitzen.

5. Struktur nach einem oder mehreren der vorhergehenden Ansprüche, bei der die Dicke des Abstandshalters (13) gleich oder größer als etwa 10 mm ist.

6. Struktur nach einem oder mehreren der vorhergehenden Ansprüche, bei der die Matte (16) auf die zweite Fläche (15) aufgebracht ist.

7. Struktur nach einem oder mehreren der vorhergehenden Ansprüche, bei der die Platte (4) wenigstens auf zwei gegenüberliegenden Seiten ein Abschlußformteil (18) trägt.

8. Struktur nach Anspruch 7, bei der das Abschlußformteil (18) auf die zweite Fläche (15) des flachen Elements (10) gesetzt ist.

9. Struktur nach Anspruch 8, bei der das Abschlußformteil (18) C-förmig ist, wobei die Matte (16) zusammen mit der dritten Lage (17) zwischen den Flanschen (18a, b) des Abschlussformteils (18) aufgenommen ist.

10. Struktur nach einem oder mehreren der vorhergehenden Ansprüche, bei der die Platten (4) auf wenigstens zwei gegenüberliegenden Seiten Verbindungsmittel bzw. komplementäre Mittel, die in gegenseitigen Eingriff gelangen können, um benachbarte Platten miteinander zu verbinden, tragen.

11. Struktur nach Anspruch 10, bei der die Verbindungsmittel und die komplementären Mittel den Abschlussformteilen (18) zugeordnet sind.

12. Struktur nach Anspruch 11, bei der die Verbindungsmittel wenigstens ein Verbindungselement (22) mit Kugelkopf (23), das über einen Zapfen (24) hiervon mit einer Platte verbunden ist, umfassen und die komplementären Verbindungsmittel wenigstens eine entsprechende Öffnung (19) in dem Abschlussformteil (18) der angrenzenden Platte (4) umfassen, wobei die Öffnung wenigstens einen ersten Abschnitt (20a, b), in den der Kugelkopf (23) lösbar eingreifen kann, und wenigstens einen zweiten Abschnitt (21), in dem der Kugelkopf (23) gehalten wird, besitzt.

13. Struktur nach einem oder mehreren der vorhergehenden Ansprüche, bei der der zweiten Fläche (15) durch Verkleben Versteifungsmittel (27) zugeordnet sind.

14. Struktur nach einem oder mehreren der vorhergehenden Ansprüche, bei der auf die beiden in Querrichtung gegenüberliegenden Seiten der Platte (4) ein Formteil (28, 29) aufgebracht ist, das die Platte (4) zwischen der ersten (11) und der dritten (17) Lage umklammert.

## Revendications

1. Structure de panneau pour ériger des cloisons navales auto-porteuses, telles que des cabines de navire, des chambres de navire et analogues, comprenant un élément plat (10) ayant une première face (14) destinée à former la surface visible d'une cloison et une seconde face opposée (15), des moyens d'isolation thermique et sonore du panneau associés à l'élément plat (10) sur le côté correspondant de celui-ci vers la seconde face (15), ledit élément plat (10) comprenant deux feuilles (11, 12) portant respectivement ladite première et ladite seconde face (14, 15), et un élément d'écartement (13) de structure en nid d'abeilles étant disposé entre lesdites feuilles et étant lié à celles-ci,
**caractérisée en ce que** lesdites feuilles (11, 12) sont réalisées en une résine renforcée résistant au feu, ladite structure en nid d'abeilles est réalisée en métal et lesdits moyens isolants comprennent une natte (16) de fibres Si-Al, ladite natte étant disposée entre une desdites feuilles (11, 12) et une troisième feuille (17), ladite troisième feuille étant également une feuille d'une résine renforcée résistant au feu, de sorte que ladite structure de panneau est totalement résistante au feu et à l'eau.

2. Structure selon la revendication 1, dans laquelle lesdites feuilles (11, 12) sont constituées d'un lamifié de résine résistant au feu, renforcé de fibres de verre.

3. Structure selon une ou plusieurs des revendications précédentes, dans laquelle ladite construction en nid d'abeilles est formée en un alliage d'aluminium.

4. Structure selon une ou plusieurs des revendications précédentes, dans laquelle lesdites feuilles (11, 12) ont une épaisseur d'environ 1 mm.

5. Structure selon une ou plusieurs des revendications précédentes, dans laquelle l'épaisseur dudit élément d'écartement (13) est égale ou supérieure à environ 10 mm.

6. Structure selon une ou plusieurs des revendications précédentes, dans laquelle ladite natte (16) est appliquée sur ladite seconde face (15).

7. Structure selon une ou plusieurs des revendications précédentes, dans laquelle ledit panneau (4) porte un moulage d'extrémité (18) le long d'au moins deux côtés opposés.

8. Structure selon la revendication 7, dans laquelle ledit moulage d'extrémité (18) est disposé contre la seconde face (15) dudit élément plat (10).

9. Structure selon la revendication 8, dans laquelle ledit moulage d'extrémité (18) est en forme de C, ladite natte (16) avec ladite troisième feuille (17) étant reçue entre les bords (18a, b) dudit moulage d'extrémité (18).

10. Structure selon une ou plusieurs des revendications précédentes, dans laquelle lesdits panneaux (4) portent, sur au moins deux côtés opposés de ceux-ci, des moyens de joint respectifs et des contre-moyens adaptés pour l'engagement mutuel pour relier ensemble des panneaux adjacents.

11. Structure selon la revendication 10, dans laquelle lesdits moyens de joint et les contre-moyens sont associés aux moulages d'extrémité (18).

12. Structure selon la revendication 11, dans laquelle lesdits moyens de joint comprennent au moins un élément de joint (22) à tête sphérique (23) lié par une extrémité (24) de celui-ci à un panneau, et les contre-moyens de joint comprennent au moins une ouverture correspondante (19) dans le moulage d'extrémité (18) du panneau adjacent (4), ladite ouverture ayant au moins une première portion (20a, b) dans laquelle ladite tête sphérique (23) peut être engagée de façon amovible, et au moins une seconde portion (21) dans laquelle ladite tête sphérique (23) est retenue.

13. Structure selon une ou plusieurs des revendications précédentes, dans laquelle des moyens de raidissement (27) sont associés, comme par collage, à la seconde face (15).

14. Structure selon une ou plusieurs des revendications précédentes, dans laquelle les deux côtés transversalement opposés dudit panneau (4) présentent un moulage (28, 29) qui enveloppe ledit panneau (4) entre lesdites première (11) et troisième (17) feuilles.
